# EUROPÄISCHE PATENTANMELDUNG

(11) **EP 0 565 188 A1**
(43) Veröffentlichungstag der Anmeldung: **13.10.1993**
(21) Anmeldenummer: 93200981.4
(22) Anmeldetag: 02.04.1993
(51) Int. Cl.: G06F 9/42

(54) **Anordnung zum Abspeichern und Auslesen von Rücksprungdaten**

(30) Priorität: 09.04.1992 DE 4211967
(71) Anmelder: Philips Patentverwaltung GmbH, 22335 Hamburg (DE); Philips Electronics N.V., 5621 BA Eindhoven (NL)
(72) Erfinder: Bauer, Harald, c/o Philips Patentverw. GmbH, W-2000 Hamburg 1 (DE); Hellwig, Karl, c/o Philips Patentverw. GmbH, W-2000 Hamburg 1 (DE); Lorenz, Dietmar, c/o Philips Patentverw. GmbH, W-2000 Hamburg 1 (DE); Schuck, Johannes, Dr, c/o Philips Patentverw. GmbH, W-2000 Hamburg 1 (DE)
(74) Vertreter: Peters, Carl Heinrich, Dipl.-Ing.

(57) **Zusammenfassung**

Wenn bei mehrfach verschachtelten Unterprogrammen ein weiterer Programmsprung oder ein Rücksprung auftritt, müssen die entsprechenden Rücksprungdaten möglichst schnell abgespeichert bzw. ausgelesen werden. Häufig wird im Stack der nächste freie Speicherplatz adressiert, so daß bei einem auftretenden Rücksprung zunächst die Adresse um einen Schritt zurückgeschaltet werden muß, bevor die Rücksprungdaten ausgelesen werden können. Wenn dagegen nach einem Programmsprung die Adresse noch nicht weitergeschaltet wird, können bei einem Rücksprung die entsprechenden Daten zwar unmittelbar ausgelesen werden, jedoch muß bei einem Programmsprung dann zunächst die Adresse um einen Schritt weitergeschaltet werden. Das Weiterschalten der Adresse benötigt also in jedem Falle eine gewisse Zeit. Erfindungsgemäß wird vorgeschlagen, gleichzeitig zwei benachbarte Adressen zu erzeugen, von denen über einen Umschalter dem Stack bei einem Programmsprung die eine Adresse und bei einem Rücksprung die andere Adresse zugeführt wird. Die Adressenweiterschaltung erfolgt unmittelbar danach. Dadurch steht beim jeweils nächsten Programmsprung bzw. Rücksprung immer die aktuelle Adresse unmittelbar zur Verfügung.

## Beschreibung

Die Erfindung betrifft eine Anordnung zum Abspeichern und Auslesen von Rücksprungdaten, insbesondere Programmadressen, bei einem Programmsprung in einer Datenverarbeitungsanlage mit einem Datenspeicher großer Kapazität und einer Speicheranordnung für die Rücksprungdaten und einem Adressengenerator für die Speicheranordnung, der bei jedem Programmsprung eine Adresse, die der beim vorhergehenden Programmsprung erzeugten Adresse benachbart ist, bzw. die beim vorhergehenden Rücksprung erzeugte Adresse und bei jedem Rücksprung die beim vorhergehenden Programmsprung angesteuerte Adresse bzw. eine Adresse, die der beim vorhergehenden Rücksprung erzeugten Adresse benachbart ist, erzeugt.

Programmsprünge im Progammablauf einer Datenverarbeitungsanlage können auftreten, wenn innerhalb eines Programms ein Unterprogramm aufgerufen wird oder wenn während eines Programmablaufs eine insbesondere externe Unterbrechungsanforderung auftritt. In diesen Fällen wird der Programmadreßzähler auf einen neuen Wert gesetzt, an dem das betreffende Unterprogramm oder Unterbrechungsprogramm beginnt. Nach Abarbeitung dieses Programms erfolgt allgemein automatisch ein Rücksprung in das Hauptprogramm, aus dem der Programmsprung erfolgt ist, und zwar an dieselbe Stelle bzw. die folgende Befehlsadresse nach der Stelle, von der der Sprung aufgetreten war. Diese Stelle bzw. die folgende Befehlsadresse muß daher vor der Ausführung des Sprungs gespeichert werden.

Innerhalb des Unterprogramms bzw. Unterbrechungsprogramms können allgemein wieder Programmsprünge auftreten, so daß schließlich eine Verschachtelung von mehreren Unterprogrammen oder Unterbrechungsprogrammen auftritt, für die jeweils die Rücksprungdaten, d.h. insbesondere die Befehlsadresse an der Sprungstelle, in einem sogenannten Stack gespeichert werden müssen.

Dabei können innerhalb eines Programms noch weitere Daten wie z.B. Rechenergebnisse auftreten, die in dem oder einem übergeordneten Programm verwendet werden. Der Begriff Rücksprungdaten soll im folgenden also nicht nur die Befehlsadresse des Programmsprungs bedeuten, sondern alle Daten, die bei oder nach einem Programmsprung gebildet werden und die während oder nach einem Rücksprung im übergeordneten Programm benötigt werden und die daher im Stack zwischengespeichert werden.

Es ist bekannt, als Stack eine Registerbank zu verwenden, wobei nach jedem Programmsprung das folgende Register adressiert wird, das die Rücksprungdaten beim nächsten Programmsprung aufnimmt. Wenn ein Unterprogramm abgearbeitet ist und ein Rücksprung in das nächste übergeordnete Programm erfolgen soll, wird das zuletzt eingeschriebene Register ausgelesen, indem eine Adressierung der einzelnen Register um einen Schritt zurück vorgenommen wird.

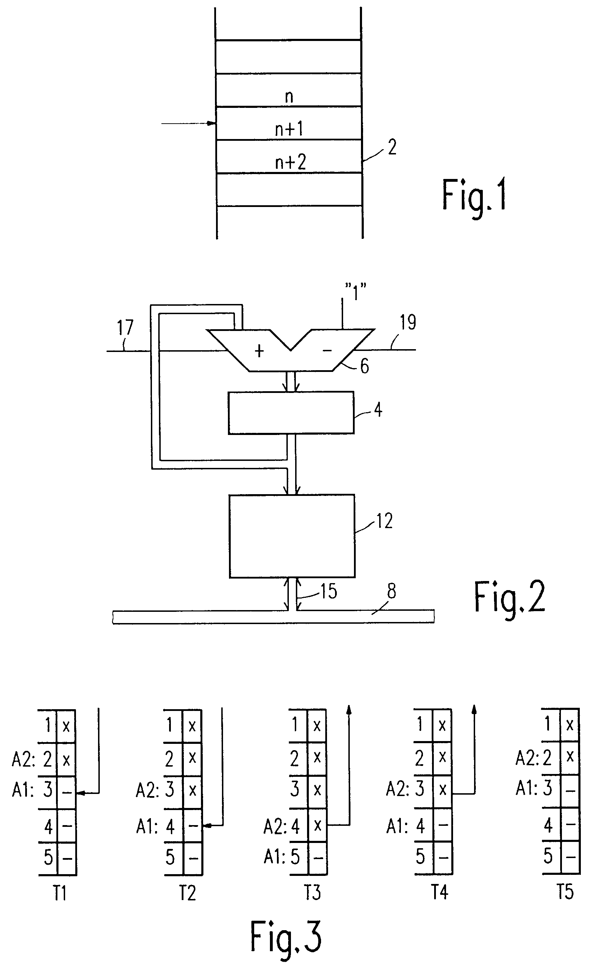

Dies soll anhand der Fig. 1 deutlicher gemacht werden. Darin ist eine Registerbank 2 schematisch angedeutet, in der drei Register mit ihren aufeinanderfolgenden Adressen n, n+1, n+2 gekennzeichnet sind. Es sei angenommen, daß bei einem Programmsprung in das Register n Rücksprungdaten eingeschrieben wurden. Unmittelbar nach diesem Einschreiben kann die Adressierung der Register bereits weitergeschaltet werden, so daß das links mit einem Pfeil bezeichnete Register n+1 bereits adressiert wird. Wenn nun innerhalb des Unterprogramms, das durch den letzten Programmsprung aufgerufen wurde, vor dessen Beendigung ein neuer Programmsprung auftritt, können die entsprechenden Rücksprungdaten unmittelbar in das bereits adressierte Register n+1 eingeschrieben werden. Die Adressierung würde dann auf das Register n+2 weiterschalten. Wenn jedoch das Unterprogramm, das mit dem letzten Programmsprung aufgerufen wurde, ohne einen weiteren Programmsprung beendet wird, muß am Ende dieses Unterprogramms das Register n ausgelesen werden, um die Rücksprungdaten zu erhalten. Dafür muß also zunächst die Adressierung einen Schritt zurückgeschaltet werden, was mindestens einen Taktzyklus erfordert, der somit verlorengeht. Dies ist für schnelle Signalprozessoren von Bedeutung.

Wenn statt dessen nach einem Programmsprung die Adressierung der Register nicht weitergeschaltet wird, muß dies beim nächsten, unmittelbar folgenden Programmsprung geschehen, so daß also beim Abspeichern der Rücksprungdaten zusätzliche Zeit benötigt wird. Dafür könnte dann ein Rücksprung ohne Zeitverzögerung ausgeführt werden.

Es ist ferner bekannt, in allgemeinen Microprozessoren, die nicht speziell für die Signalverarbeitung und die dafür notwendigen besonders schnellen Abläufe ausgelegt sind, für die Rücksprungdaten keine besondere Registerbank vorzusehen, sondern dafür den allgemeinen Datenspeicher zu verwenden, wie dies in Fig. 2 angedeutet ist. Der Datenspeicher 12 wird bei einem Programmsprung oder einem Rücksprung von einem Register 4 adressiert, dessen Ausgang über eine Addier/Subtrahieranordnung 6 mit seinem Eingang verbunden ist. Wenn angenommen wird, daß das Register 4 jeweils den nächsten freien Speicherplatz in dem Adressenbereich des Datenspeichers 12 adressiert, der den Stack für die Rücksprungdaten enthält, werden bei einem Programmsprung die über den Datenbus 8 und die Verbindung 15 zum Datenspeicher 12 zugeführten Rücksprungdaten eingeschrieben, und unmittelbar danach wird diese Adresse des Registers 4, durch den Addierer/Subtrahierer 6, der durch ein entsprechendes Programmsprungsignal auf der Leitung 17 auf Addieren geschaltet ist, um "1" erhöht und in das Register 4 zurückgeschrieben. Bei einem Rücksprung wird durch ein entsprechendes Signal auf der Rücksprungleitung 19 die Anordnung 6 auf Subtrahieren geschaltet und die im Register 4 enthaltene Adresse zunächst um "1" erniedrigt, und dann wird die adressierte Speicherstelle ausgelesen und über die Verbindung 15 auf den Datenbus 8 ausgegeben. Hieraus ist zu erkennen, daß beim Abspeichern der Rücksprungdaten ein Einschreibzyklus des Datenspeichers 12 erforderlich ist, der eine gewisse Zeit benötigt, während der Rücksprung zusätzlich noch das Erhöhen der Adresse im Register 4 benötigt, wodurch zusätzlich Zeit verloren geht.

Aufgabe der Erfindung ist es daher, eine Anordnung der eingangs genannten Art anzugeben, die ein schnelleres Abspeichern und Auslesen von Rücksprungdaten ermöglicht.

Diese Aufgabe wird erfindungsgemäß dadurch gelöst, daß der Adressengenerator zwei benachbarte Adressen gleichzeitig erzeugt, von denen bei einem Programmsprung eine erste der beiden Adressen und bei einem Rücksprung die zweite der beiden Adressen über einen Umschalter dem Adresseneingang des Datenspeichers zugeführt werden, wobei unmittelbar nach jedem Programmsprung eine neue zweite Adresse gleich der alten ersten Adresse und eine neue erste Adresse gleich der um einen Schritt weitergezählten alten ersten Adresse erzeugt wird und unmittelbar nach jedem Rücksprung eine neue erste Adresse gleich der alten zweiten Adresse und eine neue zweite Adresse gleich der um einen Schritt weitergezählten alten zweiten Adresse erzeugt wird.

Da auf die erfindungsgemäße Weise sowohl die Adresse für die Speicherstelle oder das Register, wo die Rücksprungdaten bei einem Programmsprung abgespeichert werden sollen, als auch die Adresse, wo die Rücksprungdaten bei einem Rücksprung entnommen werden müssen, unmittelbar vorhanden sind und die Ansteuerung des Umschalters für das Zuführen der beiden Adressen keine merkbare Zeitdauer erfordert, kann sowohl das Abspeichern als auch das Auslesen der Rücksprungdaten sehr schnell erfolgen. Dies gilt, wenn eine Registerbank für den Stack benutzt wird, besonders aber, wenn der Stack im allgemeinen Datenspeicher enthalten ist. Der Zeitbedarf beim Abspeichern und Auslesen von Rücksprungdaten kann im letzteren Fall noch weiter verringert weden, wenn ein zusätzliches Register verwendet wird, wie dies in der prioritätsgleichen Patentanmeldung P ... (PHD 92-042) beschrieben ist.

Die Erzeugung der beiden Adressen gleichzeitig kann nach einer Ausgestaltung der Erfindung zweckmäßig dadurch erfolgen, daß der Adressengenerator zwei Register und zwei Addier/Subtrahieranordnungen umfaßt, wobei der Ausgang jedes Registers über jeweils eine der Addier/Subtrahieranordnungen mit seinem Eingang gekoppelt ist. Diese doppelte Ausführung von Register und Addierer/Subtrahierer erfordert tatsächlich keinen großen zusätzlichen Aufwand, da die Adressen nur eine geringe Anzahl von Stellen aufweisen, insbesondere im Vergleich zu dem gesamten Adressenraum eines Datenspeichers, wenn dieser für den Stack benutzt wird, da eine beliebig umfangreiche Verschachtelung von Unterprogrammen praktisch nicht auftritt.

Eine andere Möglichkeit, zwei Adressen gleichzeitig zu erzeugen und in der erforderlichen Weise zu verändern, besteht nach einer anderen Ausgestaltung der Erfindung darin, daß der Adressengenerator zwei programmierbare Zähler umfaßt, wobei der Ausgang jedes Zählers wechselseitig mit einem Programmiereingang des jeweils anderen Zählers verbunden ist und Impulse an Zähleingängen die Zähler in zueinander entgegengesetzter Zählrichtung weiterschalten. Hierfür sind also nur zwei entsprechend aufgebaute Zähler erforderlich, deren Ansteuerung auch einfach ist.

Ausführungsbeispiele der Erfindung werden nachfolgend anhand der weiteren Zeichnung erläutert.

Es zeigen
Fig. 3 schematisch das Weiterschalten der Adressierung des Zwecks bei Programmsprüngen und Rücksprüngen,
Fig. 4 eine erste Ausführung der erfindungsgemäßen Anordnung zur Erzeugung zweier Adressen,
Fig. 5 eine zweite Ausfuhrung der erfindungsgemäßen Anordnung zur Erzeugung zweier Adressen.

In Fig. 3 ist symbolisch ein Stack mit z.B. fünf Adressen zu fünf verschiedenen Zeitpunkten T1 bis T5 dargestellt. In dem Feld neben der Adresse ist jeweils der Inhalt dieses Speicherplatzes angedeutet, wobei das Zeichen x bedeutet, daß an dieser Adresse ein gültiger Inhalt vorhanden ist, während das Zeichen - bedeutet, daß noch kein gültiger Inhalt oder ein gültiger Inhalt nicht mehr vorhanden ist.

Zum Zeitpunkt T1 enthält der Stack an den Adressen 1 und 2 die Rücksprungdaten von zwei Programmsprüngen. Der Adressengenerator für diesen Stack erzeugt dabei eine erste Adresse A1, die auf den Speicherplatz 3 zeigt, in den Daten eines nächsten Programmsprungs aufzunehmen sind. Gleichzeitig wird eine Adresse A2 erzeugt, die auf den zweiten Speicherplatz zeigt, in dem die zuletzt gespeicherten Rücksprungdaten enthalten sind, die benötigt werden, wenn als nächstes ein Rücksprung auftritt.

In dem hier beschriebenen Beispiel wird nun angenommen, daß ein weiterer Programmsprung auftritt. Die Rücksprungdaten werden nun, wie durch den Pfeil angedeutet ist, am Speicherplatz 3 gespeichert, und anschließend werden alle Adressen A2 und A1 um einen Schritt erhöht, so daß nun der zum Zeitpunkt T2 angegebene Zustand vorliegt. Wenn nun ein weiterer Programmsprung auftritt, ohne daß vorher ein Rücksprung aufgetreten ist, werden die Rücksprungdaten am Speicherplatz 4 gespeichert, und die Adressen A1 und A2 werden wieder um einen Schritt erhöht, so daß der zum Zeitpunkt T3 angegebene Zustand vorliegt. Die Adresse A1 zeigt auf den Speicherplatz 5, der (noch) keine gültigen Daten enthält, während die Adresse A2 auf den Speicherplatz 4 zeigt, in dem die Rücksprungdaten des letzten Programmsprungs enthalten sind.

Es wird nun angenommen, daß das zuletzt angesprungene Unterprogramm ohne Unterbrechung bis zum Ende abläuft, und damit erfolgt nun ein Rücksprung. Die Rücksprungdaten werden dem von der Adresse A2 adressierten vierten Speicherplatz entnommen, wie durch den Pfeil daran angedeutet ist. Unmittelbar danach werden beide Adressen um einen Schritt erniedrigt, so daß der bei T4 angegebene Zustand vorhanden ist. Wenn nun wieder ein Programmsprung auftritt, würden die Rücksprungdaten im Speicherplatz 4 gespeichert werden, der durch die Adresse A1 adressiert wird. In diesem Beispiel wird jedoch angenommen, daß auch das vorhergehende, unterbrochene Unterprogramm ohne Unterbrechung zu Ende geht, so daß danach wieder ein Rücksprung erfolgt, bei dem die Rücksprungdaten aus dem von der Adresse A2 adressierten Speicherplatz 3 ausgelesen werden, wie durch den Pfeil angegeben ist. Danach werden beide Adressen wieder um einen Schritt erniedrigt, so daß nun der bei T5 angegebene Zustand vorliegt.

Aus der Fig. 3 ist also zu ersehen, daß bei beliebigen Folgen von Programmsprüngen und Rücksprüngen stets der erforderliche Speicherplatz des Stacks unmittelbar adressiert werden kann.

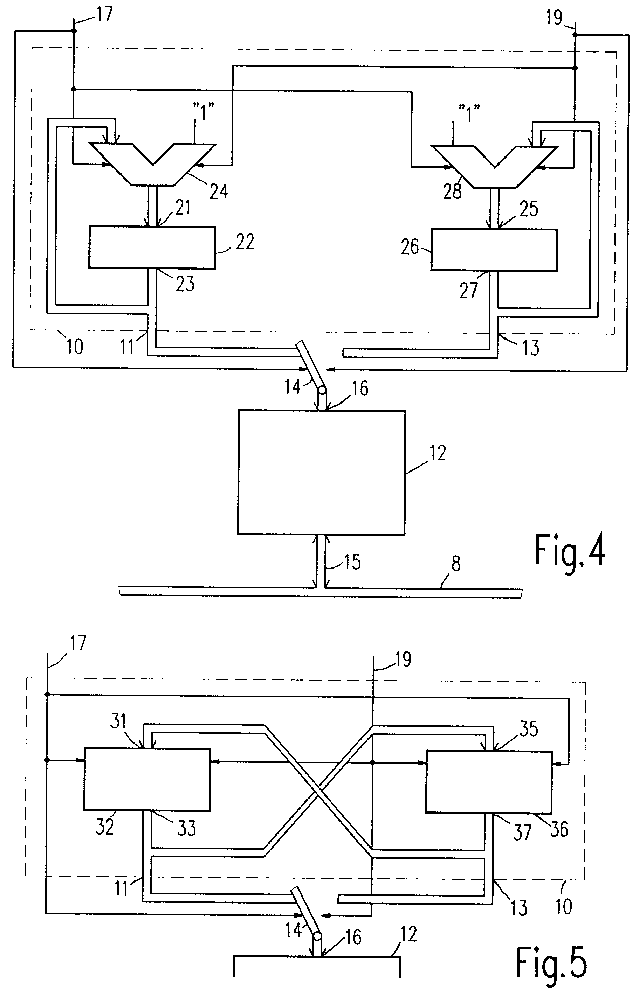

Bei der in Fig. 4 dargestellten Anordnung wird davon ausgegangen, daß der Stack im allgemeinen Datenspeicher 12 enthalten ist. Ein Adressengenerator 10 erzeugt an seinen Ausgängen 11 und 13 zwei Adressen, die sich um einen Schritt unterscheiden, wobei am Ausgang 11 die höhere Adresse auftreten möge. Wenn nun ein Programmsprung auftritt, erscheint auf der Leitung 17 ein Signal, das einen Umschalter 14 nach links schaltet, so daß die am Ausgang 11 auftretende Adresse dem Adresseneingang 16 des Datenspeichers 12 zugeführt wird. Wenn dagegen ein Rücksprung auftritt und damit auf der Leitung 19 ein Signal erscheint, wird der Umschalter 14 in die rechte Stellung geschaltet und die am Ausgang 13 vorhandene Adresse dem Adresseneingang 16 zugeführt.

Der Adressengenerator 10 enthält zwei Register 22 und 26, deren Ausgänge 23 bzw. 27 über jeweils einen Addierer/Subtrahierer 24 bzw. 28 mit dem Eingang 21 bzw. 25 des betreffenden Registers verbunden ist. Durch ein Signal auf der Leitung 17 bei einem Programmsprung werden beide Addierer 24 bzw. 28 auf "Addieren" geschaltet, und nach dem Einschreiben der Rücksprungdaten vom Datenbus 8 über die Verbindung 15 in den Datenspeicher 12 wird in beiden Registern 22 bzw. 26 eine um einen Schritt erhöhte Adresse eingeschrieben, wie dies anhand der Fig. 3 erläutert wurde. Durch ein Signal auf der Leitung 19 bei einem Rücksprung werden dagegen beide Addierer/Subtrahierer 24 bzw. 28 auf "Subtrahieren" umgeschaltet, und nach dem Auslesen der Rücksprungdaten aus dem Datenspeicher 12 werden in beide Register 22 bzw. 26 die um einen Schritt erniedrigte Adressen eingeschrieben. Auf diese Weise werden an den Ausgängen 11 und 13 ständig die Adressen A1 und A2 wie in Fig. 3 angegeben erzeugt.

Die Fig. 5 zeigt einen Aufbau des Adreßgenerators 10 mit zwei Zählern 32 und 36. Der Ausgang 33 des Zählers 32 ist mit dem Ausgang 11 des Adressengenerators 10, der die Adresse A1 liefert, sowie mit einem Programmiereingang 35 des Zählers 36 verbunden. Entsprechend ist der Ausgang 37 des Zählers 36 mit dem Ausgang 13 des Adreßgenerators 10, der die Adresse A2 liefert, sowie mit dem Programmiereingang 31 des Zählers 32 verbunden.

Bei einem Programmsprung wird durch ein Signal auf der Leitung 17 der Umschalter 14 auf den Ausgang 11 des Adreßgenerators 10 geschaltet, und danach wird der Zähler 32 um einen Schritt erhöht und gleichzeitig seine alte Stellung in den Zähler 36 übertragen. Bei einem Rücksprung wird durch ein Signal auf der Leitung 19 der Umschalter 14 in die rechte Stellung geschaltet, so daß der Adreßeingang 16 des der Einfachheit halber nur angedeuteten Datenspeichers 12 die am Ausgang 13 des Adreßgenerators 10 erzeugte Adresse A2 erhält, und anschließend wird der Zähler 36 um einen Schritt zurückgeschaltet und gleichzeitig seine vorhergehende Zählerstellung in den Zähler 32 übertragen.

Diese Steuerung der Zähler 32 und 36 ergibt sich aus der Fig. 3, denn bei einem Programmsprung ist aus dem Übergang von dem Zustand T1 zum Zustand T2 und von diesem zum Zustand T3 zu erkennen, daß die neue Adresse A2 immer gleich der alten Adresse A1 ist. Aus den Übergängen vom Zustand T3 nach T4 und von diesem nach T5 ist zu erkennen, daß bei einem Rücksprung die neue Adresse A1 immer gleich der vorhergehenden Adresse A2 ist.

Wenn die beiden Zähler 32 und 36 der Anordnung nach Fig. 5 zunächst die gleiche Zählerstellung haben, sind nach dem ersten Programmsprung beide Zähler automatisch um einen Schritt gegeneinander verschoben. Auf diese Weise ergibt sich auch eine einfache Steuerung der Anordnung nach Fig. 5.

## Patentansprüche

1. Anordnung zum Abspeichern und Auslesen von Rücksprungdaten, insbesondere Programmadressen, bei einem Programmsprung in einer Datenverarbeitungsanlage mit einem Datenspeicher großer Kapazität und einer Speicheranordnung für die Rücksprungdaten und einem Adressengenerator für die Speicheranordnung, der bei jedem Programmsprung eine Adresse, die der beim vorhergehenden Programmsprung erzeugten Adresse benachbart ist, bzw. die beim vorhergehenden Rücksprung erzeugte Adresse und bei jedem Rücksprung die beim vorhergehenden Programmsprung angesteuerte Adresse bzw. eine Adresse, die der beim vorhergehenden Rücksprung erzeugten Adresse benachbart ist, erzeugt,
dadurch gekennzeichnet, daß der Adressengenerator (10) zwei benachbarte Adressen gleichzeitig erzeugt, von denen bei einem Programmsprung eine erste der beiden Adressen und bei einem Rücksprung die zweite der beiden Adressen über einen Umschalter (14) dem Adresseneingang (16) des Datenspeichers (12) zugeführt werden, wobei unmittelbar nach jedem Programmsprung eine neue zweite Adresse gleich der alten ersten Adresse und eine neue erste Adresse gleich der um einen Schritt weitergezählte alte erste Adresse erzeugt wird und unmittelbar nach jedem Rücksprung eine neue erste Adresse gleich der alten zweiten Adresse und eine neue zweite Adresse gleich der um einen Schritt weitergezählte alte zweite Adresse erzeugt wird.

2. Anordnung nach Anspruch 1,
dadurch gekennzeichnet, daß der Adressengenerator zwei Register (22, 26) und zwei Addier/Subtrahieranordnungen (24, 28) umfaßt, wobei der Ausgang (23, 27) jedes Registers (22, 26) über jeweils eine der Addier/Subtrahieranordnungen (24, 28) mit seinem Eingang (21, 25) gekoppelt ist.

3. Anordnung nach Anspruch 1,
dadurch gekennzeichnet, daß der Adressengenerator (10) zwei programmierbare Zähler (32, 36) umfaßt, wobei der Ausgang (33, 37) jedes Zählers (32, 36) wechselseitig mit einem Programmiereingang (35, 31) des jeweils anderen Zählers (36, 32) verbunden ist und Impulse an Zähleingängen (34, 38) die Zähler (32, 36) in zueinander entgegengesetzter Zählrichtung weiterschalten.
